Europäisches Patentamt

European Patent Office

Office européen des brevets

(11) Publication number: **0 475 307 B1**

# EUROPEAN PATENT SPECIFICATION

(45) Date of publication of patent specification: **15.11.95**  (51) Int. Cl.[6]: **C08F 110/06**, C08F 4/646

(21) Application number: **91115127.2**

(22) Date of filing: **06.09.91**

(54) **Amorphous elastomeric propylene homopolymers.**

(30) Priority: **07.09.90 US 578540**

(43) Date of publication of application:
**18.03.92 Bulletin 92/12**

(45) Publication of the grant of the patent:
**15.11.95 Bulletin 95/46**

(84) Designated Contracting States:
**AT BE CH DE DK ES FR GB IT LI NL SE**

(56) References cited:
**EP-A- 0 114 391**
**DE-A- 3 246 479**
**US-A- 4 335 225**
**US-A- 4 847 340**

(73) Proprietor: **Rexene Products Company**
**5005 LBJ Freeway,**
**Occidental Tower**
**Dallas,**
**Texas 75244 (US)**

(72) Inventor: **Pellon, Brian Jay**
**3942 Lyndale Drive,**
**Odessa**
**Ector County,**
**Texas 79762 (US)**
Inventor: **Allen, George Cyrus**
**16 Tanglewood,**
**Odessa**
**Ector County,**
**Texas 79761 (US)**

(74) Representative: **Weinhold, Peter, Dr. et al**
**Patentanwälte**
**Dr. Weinhold, Dannenberg,**
**Dr. Gudel, Schubert**
**Siegfriedstrasse 8**
**D-80803 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

This invention relates to an elastomeric substantially amorphous propylene homopolymer. The polymer has properties which make it applicable for use as a thermoplastic elastomer in a variety of applications including films and film compositions.

Crystalline and amorphous polypropylenes are materials that are used in a wide variety of applications and billions of pounds of polypropylene homopolymers and copolymers are produced on a annual basis. Amorphous polypropylene is generally regarded as being predominantly comprised of an atactic propylene polymer. Alternatively, crystalline polypropylene is considered to be polypropylene that is comprised prevailingly of syndiotactic or isotactic polypropylene. The difference between isotactic, syndiotactic and atactic polypropylenes lies in the stereochemistries of the polymers. The substituent methyl groups of isotactic polypropylene are located on one side of the extended chain that makes up the polymer whereas syndiotactic propylene has methyl groups that alternate regularly from side to side. The regularity of the isotactic and syndiotactic structures allows the molecules to fit together well, resulting in a highly crystalline material. The methyl groups of atactic polypropylene, on the other hand, are distributed randomly along the polymer chain. Atactic polypropylenes are generally gummy materials of little strength that are used in the production of adhesives. The structure of isotactic, syndiotactic and atactic polypropylene is illustrated on p. 1248 of <u>Organic Chemistry</u> by Morrison and Boyd, fifth edition.

Highly crystalline isotactic polypropylenes make up the majority of commercially available polypropylenes. The isotactic structure results in polypropylene with high stiffness and good tensile strength. Crystalline polypropylene, however, generally has a high tensile set and is not suitable for those applications where elastomeric properties are desirable.

In the past, the manufacture of propylene homopolymers and copolymers using conventional polymerization techniques and unsupported catalysts resulted in the simultaneous production of substantial quantities of atactic polymer in addition to the desired highly crystalline and predominantly isotactic product. Various methods were used to separate and purify the two products and the atactic by-product was used commercially as a component in adhesive compounds, roofing materials, caulking compounds and the like. Over the last decade, however, major advances have been made in catalysts for the production of isotactic polypropylene. The use of highly active stereospecific catalysts has resulted in the production of isotactic homopolymers and copolymers that do not require purification or removal of the atactic or low crystalline polymer. The development of novel high molecular weight atactic propylene polymers has, however, received much less attention. A fractionable elastomeric polypropylene having a high molecular weight diethyl ether-soluble fraction that has about 0.5% to about 5% isotactic crystallinity and an inherent viscosity exceeding 1.5 is disclosed in U.S. Pat. No. 4,335,225 to Collette et al., issued June 15, 1982. This polymer does not, however, have the properties of the novel polymer of the present invention.

The present invention provides a novel high molecular weight amorphous propylene homopolymer that has elastic properties. A diethyl ether soluble fraction of the polymer has no isotactic crystallinity and an inherent viscosity less than 1.0 dl/g. The polymer is produced with a solid supported catalyst component and an organoaluminum component. The polymer of the present invention has a molecular weight such that the melt viscosity of the polymer is greater than 200,000 mPas (cps) at 190°C and the melt flow rate (MFR) at 230°C is less than 80 g/10 minutes. The polymer is a general purpose thermoplastic elastomer adaptable to a wide variety applications including films, filaments, fibers, sheet, molded articles, and other applications where elastomeric properties are desireable. The polymer may also be blended with other homopolymers and copolymers to produce blends having useful properties.

In accordance with the present invention there is provided a substantially amorphous high molecular weight propylene homopolymer. The terminology "high molecular weight" as used herein refers to polymers having a melt viscosity at 190°C greater than 200,000 mPas (cps) and a melt flow rate (MFR) at 230°C less than 80 g/10 minutes. The polymer includes a diethyl ether soluble fraction that exhibits no isotactic crystallinity and an inherent viscosity less than 1.0 dl/g.

Isotactic crystallinity, as referred to herein, is determined by $^{13}C$ Nuclear Magnetic Resonance (NMR). The $^{13}C$ spectra are obtained at 125°C using a JEOL FX270 NMR spectrometer operating at a $^{13}C$ frequency of 67.8 MHz with a proton decoupling of 269.65 MHz. A 12 microsecond pulse width (approximately 65°) and a 2.1 second pulse repetition rate is used for quantification. The samples are run as a solution of 0.1 gm of polymer in 2 ml of a 90/10 by weight solution of 1,2,4-trichlorobenzene and $D_6$-benzene. N-phenyl-1-napthylamine is used as an antioxidant (approximately 0.04M).

When a sample of polypropylene is tested for isotactic content as set forth above and then cooled to ambient temperature and held for 24 hours there may be a reduction in the area under the mmmm pentad peak if there is crystallization of sufficiently long isotactic sequences. The decrease in mmmm intensity is attributed to immobilization of isotactic pentads by crystallization and thereby provides a measure of the fraction of polymer crystallized. An NMR rigidity parameter is defined by Collette et al., MACROMOLECULES 22, 1358 (1989) as:

$$R_{nmr} = F_h - F_l(1 - F_h)/(1 - F_l)$$

Where $F_h$ and $F_l$ are the mmmm pentad fractions at the higher and lower temperatures, respectively. The relationship between
$R_{nmr}$ and crystallinity is given as:

$$R_{nmr} = 0.006 + 0.016(\% \text{ crystallinity})$$

An $R_{nmr}$ of less than or equal to zero would, therefore, indicate the absence of isotactic crystallinity.

The inherent viscosity of the polymer is determined by placing a 0.05 gm sample in 100 ml. of decahydronapthalene containing 0.1 g/l BHT (2,6-di-t-butyl-4-methyphenol) and heating the sample to 135°C under nitrogen as it is stirred with a magnetic stirrer for two hours. The mixture is poured through a filter stick into a Cannon-Ubbelohde viscometer and its efflux time is measured at 135°C. and compared with that of the solvent alone. The inherent viscosity is then calculated as:

$$\text{Inherent viscosity} = (\ln T/T_o)/C$$

Where T is the efflux time of the mixture, $T_o$ is the efflux time of the solvent and C is the concentration of the polymer in grams/deciliter.

The solubility of the homopolymer in the solvents referred to herein is determined by placing a sample (6 grams) into a cellulose thimble. The thimble is placed into a vertical cylindrical chamber in a round bottom glass flask containing the solvent. The solvent is heated to boiling and solvent vapors rise through an outer zone surrounding the cylindrical chamber and are cooled in a reflux condenser. The condensed solvent drips onto the thimble and extraction continues for 16 hours. The portion of the sample extracted is the soluble portion.

Melting points and heats of fusion are measured with a Perkin Elmer DSC-2C Differential Scanning Calorimeter (DSC). Melting point is determined according to ASTM method D-3481. Melt flow rates are measured using a Tinius-Olsen extrusion plastometer in accordance with ASTM method D-1238. The propylene homopolymer of the present invention has a melting-point between 145°C and 165°C and a heat of fusion of from 4 cal/gm to 10 cal/gm. The polymer has a melt viscosity of from 200,000 mPas (cps) to greater than 2,000,000 mPas (cps) at 190°C and a melt flow rate of from 4 gm/10 minutes to 80 gm/10 minutes at 230°C.

The propylene homopolymer of the present invention comprises from 35% to 55% of a diethyl ether soluble fraction. The diethyl ether soluble fraction exhibits no $^{13}$C isotactic crystallinity and has an inherent viscosity less than 1.0 dl/g. The ether soluble fraction has no detectable melting point above 40°C., a further indication of the absence of crystallinity.

The propylene homopolymer of the present invention comprises from 30% to 70% of a heptane soluble fraction. The heptane soluble fraction of the homopolymer has a melting point between 100°C. and 115°C. and a heat of fusion less than 8.37 J/g (2.0 cal/g). The heptane insoluble fraction of the homopolymer has a melting point between 145°C. and 165°C. and a heat of fusion between 41.8 J/g (10 cal./g) and 83.7 J/g (cal/g).

The homopolymer of the present invention is prepared by a process which comprises polymerizing propylene monomer at a temperature between 49°C (120°F) and 79°C (175°F) in the presence of a particular catalyst composition. Polymerization should be conducted at a pressure sufficient to maintain propylene in the liquid phase, usually pressures in the range between 2756 kPa (overpressure) (400 psig) and 3790 kPa (overpressure) (550 psig) are suitable. The preferred temperature is between 54°C (130°F) and 66°C (150°F).

Close control of the hydrogen concentration at a level such that the hydrogen partial pressure does not exceed 4.0% of the reactor pressure during the preparation of the homopolymer of the present invention is important to produce a polymer with a melt viscosity at 190°C greater than 200,000 mPas (cps). Preferably, no hydrogen is introduced during polymerization, producing a polymer with a melt viscosity at 190°C greater than 2,000,000 mPas (cps).

The catalyst composition used to produce the amorphous high molecular propylene homopolymer contains a solid, supported catalyst component and an organoaluminum component. The supported catalyst

EP 0 475 307 B1

component is comprised of an active transition metal compound such as titanium tetrahalide mixed with ban enhanced support comprised of magnesium halide and aluminum trihalide. The molar ratio of magnesium halide to aluminum trihalide is 8:0.5-3.0 and preferably 8:1.0-1.5.

The molar ratio of magnesium halide to titanium tetrahalide is between 8:0.1-1.0 and preferably 8:0.4-0.6. The preferred magnesium halide is magnesium chloride. An important step in the preparation of the solid supported catalyst component is the exclusion of electron donor compounds. Additionally, polymerization of the monomer with the catalyst should be carried out in the absence of added electron donors.

The catalyst system used to prepare the homopolymer is a composition of:

(A) a solid catalyst component produced by the method comprising:

(i) co-comminuting magnesium halide support base and aluminum trihalide in a molar ratio from 8:0.5 to 8:3 in the absence of added electron donor; and

(ii) then co-comminuting the product of step (i) in the absence of added electron donor with sufficient titanium tetrahalide to provide a molar ratio of magnesium halide to titanium tetrahalide from 8:0.1 to 8:1; and

(B) a trialkylaluminum co-catalyst component having from 1 to 9 carbon atoms in each alkyl group in a sufficient quantity to provide an Al/Ti ratio in the range from 50:1 to 600:1.

Thus, the modified method involves co-comminuting magnesium halide and aluminum trihalide in the absence of an electron donor and then co-comminuting the catalyst support so formed with titanium tetrahalide, also in the absence of an electron donor.

The solid catalyst component is used in conjunction with an organoaluminum co-catalyst, which is a trialkylaluminum wherein each alkyl group contains between 1 and 9 carbon atoms. Preferably, the alkyl groups are ethyl groups. The invention will be described hereinafter in connection with the preferred catalyst system. The molar ratio of organoaluminum co-catalyst to titanium-containing catalyst component, i.e., Al/Ti ratio should range between 50:1 and 600:1, preferably

The polymerization is carried out in a stirred reactor at average residence times between about 1 hour and about 3 hours. Sufficient catalyst quantities are fed to the reactor to result in a polymer solids concentration in the reactor slurry of from about 10 wt % to about 50 wt %. The reactor effluent is withdrawn from the reactor, and unreacted monomer and hydrogen is flashed from the polymer.

Various additives can be incorporated into the polymer, such as antioxidants, U.V. stabilizers, pigments, etc.

An additional benefit of the polymer of this invention is that since the polymer contains small quantities of catalyst residues due to the high productivity rates of the specific catalyst used in the polymerization, there is no need to remove these small amounts of catalysts from the polymer.

The invention will be further described with respect to the following examples; however, the scope of the invention is not to be limited thereby.

Example 1

The experiment was performed in a 1-liter, jacketed autoclave equipped with a magnetically coupled stirrer. The temperature of the autoclave was controlled using a mixture of equal weights of glycol and water as the heat transfer fluid flowing the jacket of the autoclave. The temperature of the fluid was controlled with a microprocessor connected to an iron/constantin thermocouple inside the autoclave. Set point temperature was maintained at +/- 0.2°C. Propylene monomer was polymerization grade passed through molecular sieve beds, as well as beds of copper catalyst for oxygen removal prior to use. Triethylaluminum (TEA) was purchased as a 25% W/W in normal heptane and used as is. A 1% W/W slurry of the solid catalyst component was prepared using degassed mineral oil. Prior to use, the autoclave was heated to 90°C. with a slow nitrogen purge for 30 minutes, cooled to 30°C., and purged with propylene vapor. The alkyl solution and catalyst slurry were prepared in septum vials in dry boxes and introduced into the reactor using hypodermic syringes.

1.98 ml. of TEA (25%) and 1.71 ml. of 1% catalyst slurry (2.5% W/W titanium content) were added to the reactor. 0.6 liters of propylene monomer (300 gm.) was introduced using a sight gauge and nitrogen pressure. The reactor content was heated to 60°C. and maintained for two hours while stirring at 500 rpm. After two hours, the temperature was rapidly lowered and the unreacted propylene vented. The polymer was dried under vacuum at 40°C. overnight. Test results are set forth in Table 1 below.

4

Example 2

Polymerization of propylene monomer was conducted in a large scale continuous pilot plant operation. Propylene monomer and catalyst components were separately and continuously charged to a stirred reactor, the monomer feed rate corresponding to about a two hour residence time in the reactor. The organoaluminum compound of the catalyst system was a 5% W/W heptane solution of triethylaluminum (TEA). The solid supported titanium tetrachloride catalyst had a titanium content of about 2.5% W/W and was pumped into the reactor as a 6% W/W mixture in petrolatum. The two catalyst components were added at rates directly proportional to the polymer production rate and in amounts sufficient to maintain the polymer solids concentration in the reactor slurry in a range from about 10% to about 15%. The reaction temperature was maintained throughout at about 140°F. (60°C.). The catalyst efficiency was calculated from the polymer slurry withdrawal rate, solids content in the slurry, and the titanium catalyst addition rate. The polymer was separated from the unreacted monomer, stabilized with Irganox® 1010, pelletized, and tested. Test result are set forth in Table 1 below.

Table 1

|  | Example 1 | Example 2 |
|---|---|---|
| Melting point °C. | 154.9 | 153.9 |
| Heat of fusion (cal./g) J/g | (7.7) 32.2 | (6.1) 25.5 |
| Melt flow rate g /10 min. @ 230°C. | 5.7 | 9.7 |
| Melt viscosity mPas (cps) @ 190°C. | >2,000,000 | >2,000,000 |
| Ether soluble fraction weight% | 42.8 | 44.0 |
| Inherent viscosity (ether soluble fraction) | 0.93 | 0.82 |
| Catalyst efficiency kg polymer/g Cat. | 11.8 | 6.8 |
| Heptane soluble fraction weight % | 43.8 | 62.8 |
| Melting point °C. (heptane soluble fraction) | 105.6 | 105.8 |
| Heat of fusion (cal./g) J/g (heptane soluble fraction) | (0.6) 2.5 | (1.6) 6.7 |
| Melting point °C. (heptane insoluble fraction) | 156.1 | 151.1 |
| Heat of fusion (cal./g) J/g (heptane insoluble fraction) | (14.4) 60.2 | (15.1) 63.2 |

Test bars of 3.175 mm (0.125") thickness were produced from the polymer using a 75 Ton Van Dorn Injection Molding machine. These bars were tested for tensile strength at break, elongation at break, and tensile set. The tensile set of the polymer was 69% at 300% elongation. No break was observed at 700% elongation.

Ether soluble fractions of the polymers of Examples 1 and 2 were extracted and tested for NMR isotactic crystallinity as described above. The results are set forth below.

Table 2

|  | Example 1 | Example 2 |
|---|---|---|
| NMR isotactic content @ 125°C.($F_h$) | 0.16 | 0.15 |
| NMR isotactic content @ 32°C.($F_l$) | 0.16 | 0.16 |
| NMR rigidity | 0 | <0 |
| NMR crystallinity | 0 | 0 |

Examples 3 and 4

Propylene monomer was polymerized in the same fashion as in Example 1 except that hydrogen was added to the reactor at a partial pressure of 34.5 kPa (over pressure) (5 psig) in example 3 and 103.4 kPa (over pressure) (15 psig) in Example 4. Test results are set forth in Table 3 below.

EP 0 475 307 B1

Table 3

|  | Example 3 | Example 4 |
|---|---|---|
| Melting point °C. | 155.8 | 157.4 |
| Heat of fusion (cal./g) J/g | (5.1) 21.3 | (5.8) 24.3 |
| Melt flow rate g /10 min. @ 230°C. | 11.3 | 79.0 |
| Melt viscosity mPas (cps) @ 190°C. | >2,000,000 | 209,000 |
| Catalyst efficiency kg polymer/g Cat | 12.5 | 13.9 |
| Heptane soluble fraction weight % | 56.4 | 60.9 |
| Melting Pt. °C (heptane soluble fraction) | 106.6 | 110.4 |
| Heat of fusion (cal./g) J/g (heptane soluble fraction) | (1.0) 4.2 | (1.1) 4.6 |
| Melting Pt. °C (heptane insoluble fraction) | 157.7 | 158.4 |
| Heat of fusion (cal./g) J/g (heptane insoluble fraction) | (17.0) 71.1 | (17.6) 73.6 |

Comparative Examples 5 and 6

In order to illustrate the importance of hydrogen control in the preparation of the homopolymer of the present invention, propylene monomer was polymerized in the same manner as in Example 1, except that hydrogen was added at partial pressures of 310 and 482 kPa (overpressure) (45 and 70 psig) respectively. The polymers were tested and the results are set forth in Table 4 below.

Table 4

|  | Example 5 | Example 6 |
|---|---|---|
| $H_2$ partial pressure (psig) | (45) | (70) |
| kPa (overpressure) | 310 | 482 |
| Melt flow rate g/10 min. @ 230°C | fluid | fluid |
| Melt viscosity mPas (cps) @ 190°C. | 6,300 | 1,730 |
| Heptane soluble fraction wt. % | 79.7 | 84.3 |
| Melting pt. °C (heptane soluble fraction) | 115.5 | 134.8 |
| Heat of Fusion (cal./g) J/g (heptane soluble fraction) | (2.3) 9.6 | (3.1) 13.0 |
| Melting pt. °C (heptane insoluble fraction) | 151.4 | 152.2 |
| Heat of Fusion (cal./g) J/g (heptane insoluble fraction) | (21.3) 89.1 | (21.5) 90.0 |

Comparative Examples 5 and 6 illustrate that the addition of excessive amounts of hydrogen results in the production of polymers having undesirably high melt flow rates and undesirably low melt viscosities.

While particular embodiments of the present invention have been described, it will be apparent to those skilled in the art that various changes and modification can be made without departing from the spirit and scope of the invention. The following claims are intended to cover all such modifications that are within the scope of the invention.

**Claims**

1. An elastomeric high molecular weight substantially amorphous propylene homopolymer having a melting point between 145°C and 165°C, a melt viscosity at 190°C greater than 200,000 mPas (cps), a heat of fusion between 16.7 J/g (4 cal./g) and 41.8 J/g (10 cal./g) , the polymer comprising from 35% to 55% of a diethyl ether soluble fraction, the fraction having an inherent viscosity less than 1.0 dl/g and being substantially free of isotactic crystallinity.

2. The polymer of claim 1 wherein the homopolymer comprises from 30% to 70% of a heptane soluble fraction, the fraction having a melting point between 100°C and 115°C and a heat of fusion less than 8.4 J/g (2.0 cal./g).

6

3. A process for the preparation of the homopolymer of at least one of the claims 1-2 wherein propylene monomer is polymerized, at a hydrogen partial pressure which does not exceed 4.0% of the reactor pressure during the preparation of the homopolymer, with a catalyst system comprising:

(A) a solid catalyst component prepared by:

(i) co-comminuting magnesium halide support base and aluminum trihalide in a molar ratio from 8:0.5 to 8:3 in the absence of added electron donor; and

(ii) then co-comminuting the product of step (i) in the absence of added electron donor with sufficient titanium tetrahalide to provide a molar ratio of magnesium halide to titanium tetrahalide from 8:0.1 to 8:1; and

(B) a trialkylaluminum co-catalyst component having from 1 to 9 carbon atoms in each alkyl group in a sufficient quantity to provide an Al/Ti ratio in the range from 50:1 to 600:1.

**Patentansprüche**

1. Elastomeres, im wesentlichen amorphes Propylenhomopolymer hohen Molekulargewichts mit einem Schmelzpunkt zwischen 145 und 165 °C, einer Schmelzviskosität bei 190 °C von über 200000 mPas (cps), einer Schmelzenthalpie zwischen 16.7 J/g (4 cal/g) und 41.8 J/g (10 cal/g), wobei das Polymer 35 % bis 55 % einer Diethylether-löslichen Fraktion umfaßt und die Fraktion eine Viskositätszahl unter 1.0 dl/g besitzt und im wesentlichen frei von isotaktischer Kristallinität ist.

2. Polymer nach Anspruch 1, worin das Homopolymer 30 % bis 70 % einer heptanlöslichen Fraktion umfaßt und die Fraktion einer Schmelzpunkt zwischen 100 °C und 115 °C und eine Schmelzenthalpie unter 8.4 J/g (2.0 cal/g) besitzt.

3. Verfahren zur Herstellung des Homopolymers gemäß mindestens einem der Ansprüche 1 - 2, worin Propylenmonomer bei einem Wasserstoffpartialdruck, der 4.0 % des Reaktordrucks während der Herstellung des Homopolymers nicht übersteigt, polymerisiert wird mit einem Katalysatorsystem, das umfaßt:

(A) eine feste Katalysatorkomponente, hergestellt durch:

(i) gemeinsames Zerkleinern eines Magnesiumhalogenid-Trägergrundstoffs und Aluminiumtrihalogenids in einem molaren Verhältnis von 8 : 0.5 bis 8 : 3 in Abwesenheit zugesetzten Elektronendonors und

(ii) anschließendes gemeinsames Zerkleinern des Produkts aus Schritt (i) in Abwesenheit zugesetzten Elektronendonors mit genügend Titantetrahalogenid, um ein molares Verhältnis von Magnesiumhalogenid zu Titantetrahalogenid von 8 : 0.1 bis 8 : 1 zu ergeben, und

(B) eine Trialkylaluminium-Cokatalysator-Komponente mit 1 bis 9 Kohlenstoffatomen in jeder Alkylgruppe in hinreichender Menge, um ein Al/Ti-Verhältnis im Bereich von 50 : 1 bis 600 : 1 zu ergeben.

**Revendications**

1. Homopolymère de propylène sensiblement amorphe de poids moléculaire élevé élastomère ayant un point de fusion compris entre environ 145°C et 165°C, une viscosité de masse fondue à 190°C supérieure à 200 000 mPa.s (cps), une chaleur de fusion comprise entre 16,7 J/g (4 calories/g) et 41,81 J/g (10 calories/g), le polymère comprenant de 35 à 55 % de fraction soluble dans l'éther diéthylique, la fraction ayant une viscosité inhérente inférieure à 1,0 dl/g et étant sensiblement exempte de cristallinité isotactique.

2. Polymère de la revendication 1 où l'homopolymère comprend de 30 % à 70 % de fraction soluble dans l'heptane, la fraction ayant un point de fusion compris entre 100°C et 115°C et une chaleur de fusion inférieure à 8,4 J/g (2,0 calories/g).

3. Procédé de préparation de l'homopolymère selon au moins une des revendications 1-2 où on polymérise le propylène monomère sous une pression partielle d'hydrogène qui ne dépasse pas 4,0 % de la pression du réacteur pendant la préparation de l'homopolymère, avec un système de catalyseur comprenant :

(A) un composant de catalyseur solide préparé de la manière suivante :

(i) combiner une base de support d'halogénure de magnésium et un trihalogénure d'aluminium en une proportion molaire de 8 : 0,5 à 8 : 3 en l'absence d'addition de donneur d'électron ajouté ; et

(ii) ensuite combiner le produit de l'étape (i) en l'absence de donneur d'électron ajouté avec suffisamment de tétrahalogénure de titane pour fournir une proportion molaire d'halogénure de magnésium au tétrahalogénure de titane de 8 : 0,1 à 8 : 1 ; et

(B) un composant co-catalyseur de trialkylaluminium ayant de 1 à 9 atomes de carbone dans chaque groupe alkyle en une quantité suffisante pour fournir une proportion Al/Ti dans l'intervalle de 50 : 1 à 600 : 1.